# FASCICULE DE BREVET EUROPEEN

(11) **EP 2 705 002 B1**
(45) Date de publication et mention de la délivrance du brevet: **01.07.2015**
(21) Numéro de dépôt: 12717287.2
(22) Date de dépôt: 26.04.2012
(51) Int. Cl.: C03B 3/02, C03B 5/235

(54) **PROCEDE DE FUSION DU VERRE DANS UN FOUR**
VERFAHREN ZUM GLASSCHMELZEN IN EINEM OFEN
METHOD OF MELTING GLASS IN A FURNACE

(30) Priorité: 02.05.2011 BE 201100258
(43) Date de publication de la demande: 12.03.2014
(73) Titulaire: AGC Glass Europe, 1348 Louvain-la-Neuve (BE)
(72) Inventeur: BIOUL, François, 6040 Jumet (BE); DOUXCHAMPS, Olivier, 6040 Jumet (BE)
(74) Mandataire: Le Vaguerèse, Sylvain Jacques
(86) Numéro de dépôt international: PCT/EP2012/057651
(87) Numéro de publication internationale: WO 2012/150175

(56) Documents cités:
- EP-A1- 0 808 806
- EP-A2- 0 872 690
- WO-A1-2009/118333

## Description

La présente invention concerne les procédés de fusion du verre dans des fours dans lesquels l'énergie de fusion est produite essentiellement par des brûleurs alimentés en combustible et en oxygène ou en gaz très riche en oxygène. Ces fours sont qualifiés habituellement de four à "oxy-combustion".

Par mesure de simplification, dans la suite de la description il est fait référence à l'oxy-combustion, et à l'oxygène. Les développements à ce sujet, sauf indication contraire englobent la mise en oeuvre d'oxy-combustion avec un oxygène pouvant renfermer une faible proportion d'air, ou encore un ensemble comprenant une partie limitée d'aéro-combustion combinée avec une oxy-combustion majoritaire.

Au nombre des avantages de l'utilisation des techniques d'oxy-combustion figurent principalement une consommation énergétique moindre et des émissions réduites de fumées indésirables.

L'oxy-combustion permet un gain énergétique au moins pour la raison que l'énergie des gaz de combustion n'est pas absorbée en partie par l'azote de l'air. Dans les fours traditionnels, même si une partie de l'énergie entraînée avec l'azote est récupérée dans les régénérateurs, les fumées finalement évacuées en entraînent encore une part significative. La présence de l'azote participe à cette perte.

La réduction de la consommation énergétique par unité de production par voie de conséquence présente en plus l'avantage de limiter les émissions de dioxyde de carbone et donc de répondre aux exigences règlementaires dans ce domaine.

La présence d'azote est aussi source de formation d'oxydes dits NOx, dont l'émission est strictement règlementée en raison des dommages liés à la présence de ces composés dans l'atmosphère.

L'utilisation d'oxygène permet de s'affranchir des problèmes liés à l'azote de l'air pour autant que le fonctionnement des fours garantisse qu'en dehors du comburant, de l'air, et donc de l'azote, ne pénètre pas accidentellement dans l'enceinte dans laquelle s'effectue la combustion.

La publication WO 2009/118333 propose de faire fonctionner des fours verrier de grande capacité en oxy-combustion. Comme indiqué ci-dessus une des conditions pour que ces fours présentent le plus possible d'avantages par rapport aux fours traditionnels utilisant de l'air comme comburant, est que la combustion s'effectue dans une atmosphère dépourvue d'azote.

L'économie de la fusion du verre par oxy-combustion est indissociable du coût lié à l'utilisation d'oxygène. Pour que cette technique reste économiquement attrayante, il faut compenser ce coût supplémentaire par des gains à la fois sur la consommation énergétique nécessaire à la fusion, mais aussi sur les techniques de récupération de la chaleur qui n'est pas immédiatement utilisée pour la fusion. Les gaz de combustion sortant des fours sont à des températures très élevées, une récupération de l'énergie évacuée avec ces gaz est indispensable. Cette énergie dans la publication précitée est utilisée pour la mise en température de l'oxygène consommé. Ce document antérieur présente en détail des modes de récupération de la chaleur des fumées pour le préchauffage de l'oxygène.

Le préchauffage de l'oxygène, dans les limites de température permises par la corrosion de l'oxygène chaud n'épuise pas l'énergie contenue dans les fumées. Une récupération supplémentaire est donc souhaitable. Dans ce sens un chauffage des matières premières est une solution éventuelle à cette question.

Diverses techniques ont été proposées pour une opération de préchauffage des matières premières au moyen de l'énergie contenue dans les fumées. Les contraintes liées à la récupération par le préchauffage des matières premières sont multiples. Elles tiennent d'abord à la source de chaleur utilisée, les gaz de combustion, leur nature et surtout leurs températures. Il s'agit aussi de la nature des matériaux traités, les produits de base pulvérulents sable, carbonates de sodium, carbonate de calcium, magnésie..., mais aussi les produits recyclés (calcin) et la proportion de ces derniers dans l'ensemble.

Les fumées sortant des fours sont à des températures élevées même si elles n'atteignent pas celles des fours fonctionnant en aéro-combustion. Dans le cas des fours à oxy-combustion dont il est question, l'échange thermique entre la charge vitrifiable et les gaz de combustion est accru par un temps de séjour prolongé de ces derniers dans le four. Les gaz de combustion sont en effet pour la majeure partie, ou la totalité, récupérés en amont du four après qu'ils aient balayé toute la zone des matières premières surnageant sur le bain fondu.

Dans le cas d'un four à oxy-combustion les fumées sortant du four sont en général à moins de 1500°C alors qu'en aéro-combustion elles peuvent dépasser 1600°C.

Comme dans la publication précitée, l'énergie contenue dans les fumées est utilisée pour réchauffer l'oxygène alimentant les brûleurs du four. Ceci est réalisé par un échange thermique qui est avantageusement conduit en deux temps pour les raisons rappelées ci-dessous et qui tiennent à la nécessité de procéder au chauffage de l'oxygène à proximité des brûleurs.

L'oxygène chaud est extrêmement corrosif pour tous les alliages. La sécurité exige de limiter au maximum la présence de toute soudure, tout raccord, toute vanne, et même les courbures trop accentuées susceptibles d'accroître les mécanismes de corrosion dans les canalisations acheminant cet oxygène chaud. Le circuit entre le chauffage de l'oxygène et son utilisation dans les brûleurs du four doit être le plus court possible. Les fours de grande capacité s'étendent sur des longueurs qui ne permettent pas de disposer un seul échangeur pour le chauffage de tout l'oxygène en conservant la proximité des brûleurs. Pour cette raison le chauffage est réalisé dans une pluralité d'échangeurs de dimensions limitées situés à proximité immédiate des brûleurs, et chacun de ces échangeurs de chauffage de l'oxygène n'alimente qu'un très petit nombre de brûleurs, voire un seul.

Pour concilier le traitement des fumées rassemblées et celui de l'oxygène localisé près des brûleurs, il est nécessaire d'avoir recours à un double échange thermique. D'une part les fumées dans un premier échangeur servent à réchauffer de l'air constituant un fluide caloporteur. Cet air chauffé alimente des échangeurs secondaires utilisés pour chauffer l'oxygène.

Dans le premier échangeur les fumées peuvent porter l'air à des températures de l'ordre de 800°C ou plus. L'air en question véhicule donc une part importante de l'énergie contenue dans les fumées.

Selon l'invention le préchauffage de l'oxygène est effectué avantageusement dans des échangeurs constitués dans des aciers montrant une excellente résistance à l'oxygène chaud. Des échangeurs et des matériaux convenant à cet usage sont décrits dans la demande de brevet EP A 2145151.

L'oxygène chaud fourni par l'échangeur est porté à une température qui au plus peut atteindre 650°C. Cette valeur est fonction de la résistance que l'on peut obtenir avec des alliages métalliques qui présentent les meilleures caractéristiques. Cette température limite permet de garantir une durée d'utilisation en rapport avec le type d'installation considéré.

En pratique pour une meilleure sécurité il est préférable de maintenir la température de l'oxygène à moins de 600°C.

Pour que le préchauffage de l'oxygène soit suffisant pour améliorer le bilan énergétique de manière significative, il est préféré de régler les conditions de l'échange de sorte que la température de l'oxygène ne soit pas inférieure à 350°C.

La température de l'air caloporteur à la sortie des échangeurs de chauffage de l'oxygène est ainsi ramenée au plus à 600°C et peut s'abaisser à environ 350°C selon les débits respectifs des gaz impliqués dans l'échange thermique.

Dans toutes les configurations le chauffage de l'oxygène, même porté aux températures les plus élevées praticables comme indiqué ci-dessus, ne peut absorber la totalité de l'énergie des fumées, ni même la totalité de l'énergie contenue dans l'air servant de caloporteur entre les échangeurs primaires et secondaires. Dans ces conditions l'air ayant réchauffé l'oxygène selon l'invention est utilisé pour préchauffer la charge vitrifiable ou une partie de celle-ci.

Comme indiqué ci-dessus les fumées sortent du premier échangeur encore à des températures. élevées. A ces températures elles véhiculent encore une énergie considérable qu'il est nécessaire de récupérer pour l'économie du système. De manière préférée selon l'invention le préchauffage des matières premières est obtenu en combinant l'énergie provenant de l'air ayant réchauffé l'oxygène, et des fumées sortant du premier échangeur servant à chauffer l'air caloporteur.

Aux contraintes liées aux fumées et à l'oxygène exposées ci-dessus, s'ajoutent celles relatives au réchauffage des charges vitrifiables. Ce chauffage est effectué également dans un échangeur thermique. Pour éviter tout risque d'entrainement de poussières à partir de la charge pulvérulente, les produits solides réchauffés circulent dans l'échangeur sans entrer en contact avec les gaz, air et fumées, servant de caloporteur. Les deux circulent dans des espaces séparés et le chauffage des matières premières se fait essentiellement par conduction au contact des parois de l'échangeur chauffées par les gaz.

Une des difficultés du chauffage des matières premières est d'assurer leur transport sans qu'il ne se forme d'agglomérats susceptibles d'obstruer l'appareillage. La présence d'humidité dans la charge pulvérulente accroît ce risque. Une certaine teneur en eau est traditionnelle pour éviter l'envol de poussières lors de l'introduction de la charge dans le four. La séparation des matières premières et des gaz de chauffage écarte les risques d'accroissement de cette teneur en eau.

Pour éviter une trop forte teneur en eau dans la partie de l'échangeur recevant les matières premières, la température en tout point de cet échangeur est de préférence supérieure à 100°C et de préférence n'est pas inférieure à 150°C.

Bien entendu il est avantageux de porter les matières premières aux températures les plus élevées possibles qui soient compatibles avec la nature de ces matériaux. Il est nécessaire ainsi de ne pas excéder une température qui rendrait « collants » certains composés de cette charge vitrifiable. En pratique la température de la charge vitrifiable dans l'échangeur ne doit pas dépasser 550°C, et de préférence ne doit pas être supérieure à 500°C.

De la même façon il faut éviter les difficultés propres aux gaz dans la partie de l'échangeur dans laquelle ils circulent. Lorsque le gaz utilisé pour chauffer les matières premières est un mélange de fumées et d'air, la température de ces gaz à la sortie de l'échangeur doit être réglée de manière précise pour permettre un traitement de désulfuration sur électro-filtres suivant les modes traditionnels pour ces opérations. Cette température doit se situer entre 300 et 400°C, et de préférence entre 300 et 350°C.

Pour parvenir à un échange convenable, la température du mélange d'air provenant du chauffage de l'oxygène et des fumées issues des premiers échangeurs doit être relativement élevée. Mais en particulier pour tenir compte de la résistance des alliages, la température des gaz entrant dans l'échangeur ne dépasse pas de préférence 650°C, et est avantageusement égale ou inférieure à 600°C.

Eventuellement, si la température du mélange des gaz entrant dans l'échangeur de chauffage des matières premières est trop élevée, un ajustement peut être entrepris par dilution avec un apport limité d'air ambiant.

L'invention est définie par le procédé de la revendication 1 et décrite de façon détaillée dans la suite en faisant référence aux planches de dessins dans lesquelles :
- la figure 1 est un schéma général illustrant le mode de fonctionnement en oxy-combustion d'un four verrier de fusion de grande capacité ;
- la figure 2 illustre de manière plus détaillée le traitement des fumées de la figure 1 ;
- la figure 3 illustre de manière synoptique le fonctionnement du four comprenant un mode de préchauffage des matières premières ;
- la figure 4 présente une variante du préchauffage de la figure 3;
- la figure 5 est analogue à la figure 4, et comprend en plus le chauffage du combustible parallèlement à celui de l'oxygène.

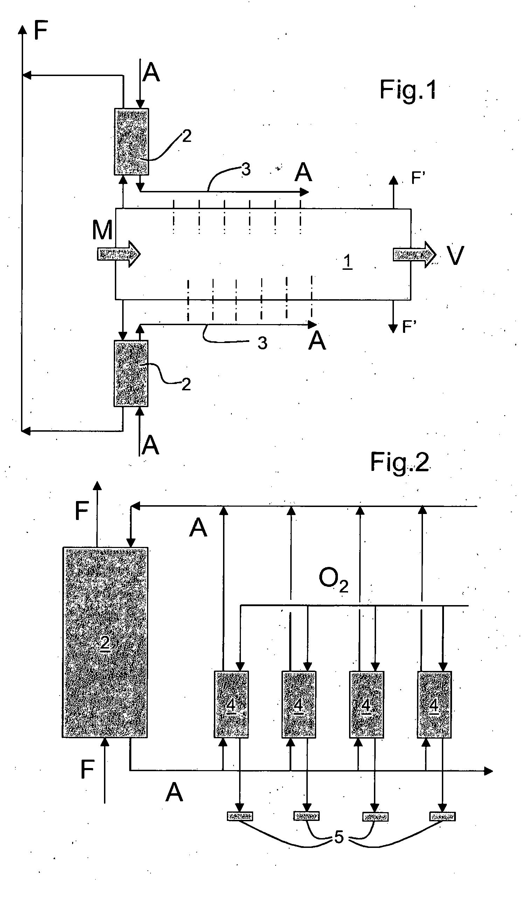

Le four schématisé à la figure 1 est du type de ceux utilisés pour les productions de grande capacité comme ceux servant à alimenter la production de verre plat par les techniques de verre "floté". Des fours de ce type produisent en continu des quantités de verre qui peuvent aller jusqu'à 1000 tonnes/jour. Pour atteindre ces performances les fours doivent présenter une puissance qui atteint 60 MW. Pour ce type de four la production n'est pas inférieure à 300 tonnes/jour. De sa capacité dépend au moins en partie le mode de fonctionnement du four et notamment tout ce qui touche aux questions d'optimisation de la consommation énergétique comme précisé dans la suite.

Le four comprend un bassin de fusion et affinage 1 dans lequel les matériaux M constituant la charge vitrifiable sont enfournés à une extrémité et le verre fondu V est extrait à l'autre extrémité pour suivre son traitement dans la zone de conditionnement puis jusqu'à la formation de la feuille sur "float".

Sur le four, et particulièrement dans la partie amont de celui-ci, des brûleurs à oxy-combustion sont distribués de part et d'autre du bassin de fusion. L'emplacement de ces brûleurs, non représentés, est matérialisé sur le schéma par les traits mixtes.

Les gaz de combustion ou fumées F sont essentiellement, ou même en totalité, évacués dans la partie amont du four à proximité de l'enfournement des matières premières. Le cas échéant une fraction modeste de ces gaz F' peut être dirigée vers l'extrémité aval du four dans le but de prévenir la pénétration dans l'enceinte du four d'air en provenance de la zone de conditionnement située en aval.

La circulation des gaz de combustion à contre-courant du sens général d'écoulement du verre permet de maximiser le transfert de chaleur dans l'enceinte. Néanmoins la température des gaz de combustion sortant groupés du four reste très élevée. Ils sont ordinairement à des températures de l'ordre de 1200 à 1400°C.

Le passage dans un premier échangeur thermique 2 permet d'abaisser la température de ces gaz et surtout de récupérer une partie de la chaleur qu'ils véhiculent.

Dans le schéma de la figure 1 deux échangeurs 2 sont présentés, un sur chaque côté du four pour faciliter le traitement. Eventuellement la présence de deux échangeurs permet d'interrompre le fonctionnement de l'un d'entre eux pour en assurer la maintenance le second traitant momentanément l'ensemble des gaz de combustion. Dans cette hypothèse non représentée, le gaz caloporteur, de l'air A, échangeant avec les fumées doit également alimenter les deux canalisations symétriques 3.

Le gaz qui récupère la chaleur dans l'échangeur 2 doit servir à réchauffer l'oxygène O utilisé dans les brûleurs. Pour la raison notamment que le chauffage de l'oxygène doit intervenir au plus près de l'emplacement de son utilisation, le chauffage est conduit systématiquement dans des échangeurs 4 proches des brûleurs 5 comme présenté à la figure 2. Les échangeurs 4 reçoivent d'une part le gaz caloporteur, typiquement de l'air A, préalablement chauffé par les fumées dans l'échangeur 2, et d'autre part l'oxygène. Contrairement à l'oxygène chaud, l'air chaud A peut être transporté sans dommage sur une certaine distance.

Dans les échangeurs 4 l'oxygène passe de la température ambiante à une température qui peut atteindre au plus haut 550-600°C.

A la figure 2 chaque brûleur 5 est alimenté en oxygène chaud O par un échangeur 4. Le cas échéant un échangeur 4 peut alimenter quelques brûleurs. Mais le plus souvent, chaque échangeur n'alimente pas plus de deux brûleurs simultanément.

Dans la demande précitée WO 2009/118333, le gaz caloporteur effectue un double échange. D'une part il est chauffé par les fumées et d'autre part il chauffe l'oxygène. La circulation du gaz caloporteur entre les échangeurs s'effectue en circuit fermé. Le circuit de ce gaz, qui est reproduit à la figure 2 fait retour du gaz à l'échangeur 2 après qu'il ait réchauffé l'oxygène. De cette façon l'énergie encore contenue dans ce gaz caloporteur A est conservée.

La température de ce gaz, après avoir chauffé l'oxygène dans les échangeurs 4, est encore relativement élevée. Elle peut atteindre 500°C ou plus. L'utilisation de l'énergie emmagasinée dans ce gaz reste donc importante. Un objet de l'invention est d'utiliser l'énergie de ce gaz caloporteur A pour chauffer les matières premières.

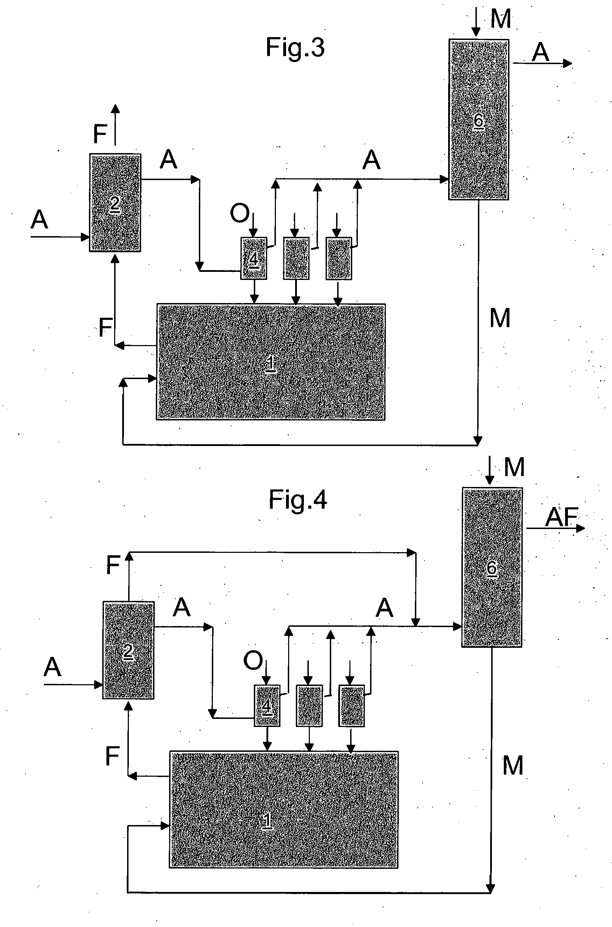

Contrairement à ce qui est représenté à la figure 2, correspondant à l'art antérieur cité, selon l'invention, représentée aux figures 3, 4 et 5, l'air caloporteur A n'est pas retourné à l'échangeur 2 après le chauffage de l'oxygène O. Cet air en provenance des différents échangeurs 4 est rassemblé et dirigé vers un échangeur 6 pour chauffer la charge vitrifiable M avant l'enfournement de cette dernière.

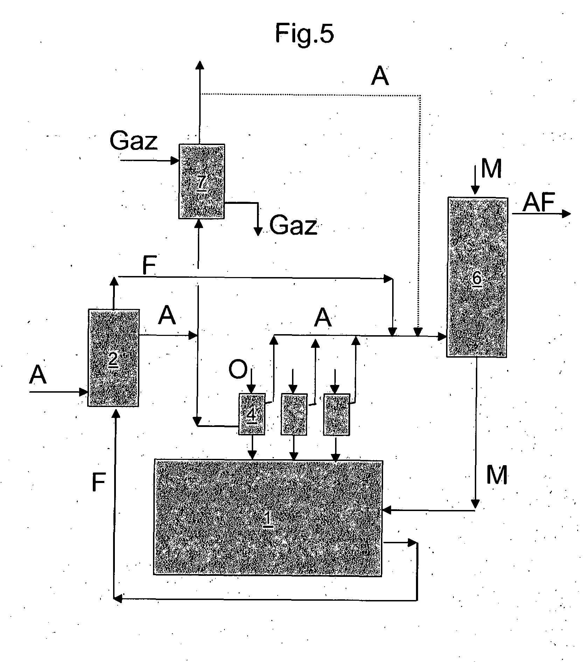

L'énergie véhiculée par l'air A après le chauffage de l'oxygène permet le chauffage au moins partiel des matières premières M. Néanmoins il est préférable d'ajouter une source supplémentaire pour atteindre un chauffage plus significatif. Un moyen consiste, comme représenté aux figures 4 et 5, d'utiliser les fumées F sortant de l'échangeur 2.

Après l'échangeur 2 les fumées sont encore à température élevée. Elle n'est généralement pas inférieure à 700°C sauf à utiliser des échangeurs surdimensionnés.

Bien entendu ces fumées pourraient être rejetées. Mais, même dans cette séquence peu avantageuse au plan énergétique, elles devraient subir une dépollution pour en éliminer notamment les oxydes de soufre. Cette élimination est opérée par exemple dans des électro-filtres et pour éviter la détérioration de ces filtres il faut encore abaisser la température jusqu'aux environ de 300-400°C.

L'utilisation de ces fumées F ajoutée à celle de l'air A provenant du chauffage de l'oxygène O, permet tout à la fois un chauffage accru des matières premières M et un abaissement des températures, qui garantit la protection de l'échangeur.

Le mélange des fumées sortant de l'échangeur 2 et de l'air provenant des échangeurs 4 AF ne doit pas conduire à des températures supérieures à celles qui peuvent être mises en oeuvre dans l'échangeur 6 de chauffage des matières premières. La température que la charge vitrifiable ne doit pas excéder est fonction de sa composition. Le calcin ne pose pas de problème particulier, sa température de ramollissement étant supérieure à celle acceptable pour certaines des autres matières premières utilisées, notamment les carbonates qui peuvent devenir "collants" à des températures bien inférieures à celle de ramollissement du calcin.

En règle générale pour des compositions vitrifiables typiques, la température ne doit pas dépasser 600°C

Si la température du mélange AF est supérieure à 600°C un abaissement peut être aménagé par exemple par adjonction d'air supplémentaire à température ambiante.

Un schéma analogue. à celui des figures 3 et 4 est reproduit à la figure 5. Pour celui-ci, l'air chauffé par les fumées dans l'échangeur 2 est utilisé pour une part comme précédemment pour chauffer l'oxygène dans les échangeurs 4, et d'autre part pour chauffer le combustible utilisé par les brûleurs dans l'échangeur 7.

Les conditions de flux respectifs dans les échangeurs 2 et 7 sont réglés en fonction des températures appropriées au différents produits chauffés. Les combustibles ne peuvent être portés à des températures très élevées, en particulier les combustibles liquides ne supportent sans dégradation que des températures n'excédant pas 180°C, et de préférence pas 150°C. Les gaz naturels peuvent être portés à des températures plus élevées. Ces températures peuvent atteindre 500°C sans risque de craquage susceptible d'encrasser les brûleurs.

L'air sortant de l'échangeur 7 est soit rejeté, soit est utilisé également pour le chauffage des matières premières conjointement avec celui provenant du chauffage de l'oxygène (en pointillé sur la figure 5).

Les échangeurs 6 utilisés pour le chauffage des matières preinières doivent présenter deux circuits séparés, l'un pour les gaz chauds, l'autre pour les matières premières pulvérulentes solides. Des échangeurs de ce type sont connus de l'art antérieur. En particulier les échangeurs préférés pour cette opération selon l'invention aménagent la progression des matières premières par simple gravité, ces matières étant introduites au sommet de l'échangeur et s'écoulant de haut en bas. Dans cette progression les matières premières progressent au contact des parois de l'échangeur chauffées par les gaz.

Les parois de l'échangeur 6 peuvent comporter des déflecteurs qui dévient la progression de la charge. Ces déflecteurs participent aussi à un contact favorisant la conduction de la chaleur. Ils permettent encore d'éviter un tassement excessif de cette charge en faisant en sorte que la masse de cette charge ne conduise pas à une compression correspondant à toute la hauteur de l'échangeur. Ces déflecteurs forment d'une certaines manière des paliers intermédiaires la pression à chacun de ces paliers étant limitée à la masse disposée entre deux paliers successifs. A cet effet les déflecteurs sont avantageusement disposés en quinconce sur les parois.

Dans le type d'échangeur séparant la charge de matières premières et les gaz de chauffage, utilisé et aux températures préconisées selon l'invention, la proportion de calcin présente est indifférente. Eventuellement, la totalité de la charge peut être constituée de matières premières de base.

A titre d'exemple, la technique selon l'invention est mise en oeuvre sur un four verrier produisant 750 tonnes par jour de verre, fonctionnant en oxy-combustion. Le schéma de fonctionnement est celui illustré à la figure 4. Les modalités s'établissent ainsi :
dans le four
   - consommation de gaz 3900 Nm³/h
   - consommation d'oxygène 8000 Nm³/h
   - débit des fumées à la sortie du four 18700 Nm³/h
   - température des fumées à la sortie du four 1400°C
2 échangeurs (2)
   - température de sortie des fumées 800°C
   - air entrant à température ambiant chauffé en sortie à 800°C
   - débit d'air 15300 Nm³/h
10 brûleurs et échangeurs (4) de chauffage de l'oxygène
   - température de l'oxygène en sortie des échangeurs (4) 550°C
   - température de l'air à la sortie des échangeurs (4) 350°C mélange des fumées à 800°C et air à 350°C conduisant à une température de 600°C pour un débit de 34000 Nm³/h à l'entrée dans l'échangeur unique (6) matières premières alimentées à 50°C séjournant en moyenne 8 heures dans l'échangeur, et portées à 420°C

Le bénéfice de la mise en oeuvre du chauffage des matières premières en termes d'économie d'énergie est supérieur à celui provenant du chauffage de l'oxygène. Le préchauffage des matières premières conduit approximativement à un gain énergétique de l'ordre de 18% soit environ 1GJ /tonne de verre, auquel s'ajoute l'économie correspondante sur la consommation d'oxygène. Le chauffage des matières premières contribue donc de manière significative à l'économie globale des fours fonctionnant en oxy-combustion. Cette économie autorise la mise en oeuvre de ces techniques en dépit des investissements nécessaires supplémentaires. Le bilan est d'autant plus positif que les fours considérés sont de capacité plus importante.

## Revendications

1. Procédé de fusion du verre chauffé dans un four au moyen de brûleurs, dans lequel l'énergie de combustion est produite par oxy-combustion pour au moins 65%, et de préférence au moins 80%, les gaz de combustion à la sortie du four étant passés dans un premier échangeur thermique (2) où circule de l'air, l'air et les gaz de combustion étant dans des circuits distincts et séparés, l'air chauffé dans ce premier échangeur étant passé dans au moins un second échangeur (4) destiné à préchauffer le comburant à base d'oxygène, le comburant et l'air circulant dans des circuits distincts et séparés, **caractérisé en ce que** l'air sortant de ce second échangeur est passé dans un troisième échangeur (6) pour le préchauffage sans contact, d'au moins une partie de la charge vitrifiable comportant des matières premières et éventuellement du calcin.

2. Procédé selon la revendication 1 dont la capacité de production journalière est d'au moins 300 tonnes.

3. Procédé selon l'une des revendications précédentes dans lequel l'air issu du, ou des seconds échangeurs (4), est mélangé avec les gaz de combustion sortant du premier échangeur (2), avant de circuler dans le troisième échangeur (6) réchauffant les matières premières.

4. Procédé selon la revendication 3 dans lequel la température du mélange d'air et de gaz de combustion entrant dans l'échangeur de préchauffage de la charge vitrifiable (6) n'est pas supérieure à 600°C.

5. Procédé selon l'une des revendications précédentes dans lequel la charge vitrifiable au cours de son préchauffage est portée à une température qui n'est pas supérieure à 550°C et de préférence pas supérieure à 500°C.

6. Procédé selon l'une des revendications précédentes dans lequel l'échangeur thermique pour le préchauffage de la charge vitrifiable est aménagé pour que la progression de la charge s'effectue essentiellement par gravité.

7. Procédé selon l'une des revendications précédentes dans lequel la circulation des gaz est à contre-courant de celle de la charge vitrifiable dans l'échangeur (6) de préchauffage de cette dernière.

8. Procédé selon l'une des revendications précédentes dans lequel les flux dans l'échangeur de préchauffage de la charge vitrifiable (6) sont réglés de telle sorte que la température des gaz à la sortie de cet échangeur ne soit comprise entre 300 et 400°C.

9. Procédé selon l'une des revendications précédentes dans lequel une partie de l'air chauffé dans l'échangeur (2) est utilisé pour chauffer le combustible dans une échangeur (7).

## Patentansprüche

1. Schmelzverfahren des mit Hilfe von Brennern in einem Ofen erwärmten Glases, wobei mindestens 65%, und vorzugsweise mindestens 80%, der Verbrennungsenergie durch Verbrennung mit Sauerstoff erzeugt werden, wobei die Verbrennungsgase am Ausgang des Ofens in einen ersten Wärmetauscher (2) geleitet werden, in dem Luft zirkuliert, wobei die Luft und die Verbrennungsgase sich in unterschiedlichen und getrennten Kreisläufen befinden, wobei die in diesem ersten Tauscher erwärmte Luft in mindestens einen zweiten Tauscher (4) geleitet wird, der dazu bestimmt ist, den brandfördernden Stoff auf der Basis von Sauerstoff vorzuwärmen, wobei der brandfördernde Stoff und die Luft in unterschiedlichen und getrennten Kreisläufen zirkulieren, **dadurch gekennzeichnet, dass** die aus diesem zweiten Tauscher austretende Luft in einen dritten Tauscher (6) zur kontaktlosen Vorwärmung mindestens eines Teils des glasbildenden Füllstoffs geleitet wird, der Rohstoffe und ggf. Scherben aufweist.

2. Verfahren nach Anspruch 1, dessen tägliche Produktionskapazität mindestens 300 Tonnen beträgt.

3. Verfahren nach einem der vorhergehenden Ansprüche, wobei die von dem oder den zweiten Tauschern (4) stammende Luft mit den aus dem ersten Tauscher (2) austretenden Verbrennungsgasen vermischt wird, ehe sie im dritten Tauscher (6) zirkuliert, der die Rohstoffe aufwärmt.

4. Verfahren nach Anspruch 3, wobei die Temperatur der Luft- und Verbrennungsgasmischung, die in den Vorwärmungstauscher des glasbildenden Füllstoffs (6) eintritt, nicht höher als 600°C ist.

5. Verfahren nach einem der vorhergehenden Ansprüche, wobei der glasbildende Füllstoff während seiner Vorwärmung auf eine Temperatur gebracht wird, die nicht höher als 550°C und vorzugsweise nicht höher als 500°C ist.

6. Verfahren nach einem der vorhergehenden Ansprüche, wobei der Wärmetauscher zur Vorwärmung des glasbildenden Füllstoffs eingerichtet ist, damit die Verbreitung des Füllstoffs hauptsächlich durch Schwerkraft erfolgt.

7. Verfahren nach einem der vorhergehenden Ansprüche, wobei die Zirkulation der Gase im Gegenstrom zu derjenigen des glasbildenden Füllstoffs im Vorwärmungstauscher (6) dieses letzteren ist.

8. Verfahren nach einem der vorhergehenden Ansprüche, wobei die Flüsse im Vorwärmungstauscher des glasbildenden Füllstoffs (6) so geregelt sind, dass die Temperatur der Gase am Ausgang dieses Tauschers zwischen 300 und 400°C liegt.

9. Verfahren nach einem der vorhergehenden Ansprüche, wobei ein Teil der im Tauscher (2) erwärmten Luft verwendet wird, um den Brennstoff in einem Tauscher (7) zu erwärmen.

## Claims

1. Method of melting glass heated in a furnace by means of burners, in which method at least 65%, and preferably at least 80%, of the combustion energy is produced by oxycombustion, the combustion gases leaving the furnace being passed through a first heat exchanger (2), in which air circulates, the air and the combustion gases being in distinct and separate circuits, the air heated in this first exchanger being passed through at least a second exchanger (4) intended to preheat the oxygen-based oxidant, the oxidant and the air circulating in distinct and separate circuits, **characterized in that** the air leaving this second exchanger is passed through a third exchanger (6) for the contactless preheating of at least some of the vitrifiable charge comprising raw materials and possibly some cullet.

2. Method according to Claim 1, of which the daily production capacity is at least 300 tonnes.

3. Method according to one of the preceding claims, in which the air from the second heat exchanger or exchangers (4) is mixed with the combustion gases leaving the first exchanger (2) before circulating through the third exchanger (6) heating up the raw materials.

4. Method according to Claim 3, in which the temperature of the mixture of air and of combustion gas entering the vitrifiable-charge preheating exchanger (6) does not exceed 600°C.

5. Method according to one of the preceding claims, in which, while it is being preheated, the vitrifiable charge is raised to a temperature that does not exceed 550°C and preferably does not exceed 500°C.

6. Method according to one of the preceding claims, in which the heat exchanger for preheating the vitrifiable charge is configured so that the charge progresses essentially under gravity.

7. Method according to one of the preceding claims, in which the gases circulate countercurrent-wise with respect to the vitrifiable charge in the exchanger (6) for preheating the latter.

8. Method according to one of the preceding claims, in which the flows through the exchanger (6) for preheating the vitrifiable charge are regulated in such a way that the temperature of the gases leaving this exchanger is comprised between 300 and 400°C.

9. Method according to one of the preceding claims, in which some of the air heated in the exchanger (2) is used to heat the fuel in an exchanger (7).
